# EUROPEAN PATENT APPLICATION

(11) **EP 1 229 712 A2**
(43) Date of publication of application: **07.08.2002**
(21) Application number: 01307293.9
(22) Date of filing: 28.08.2001
(51) Int. Cl.: H04M 15/00, H04Q 7/00

(54) **Rate change notification**

(30) Priority: 06.02.2001 US 777929
(71) Applicant: LUCENT TECHNOLOGIES INC., Murray Hill, New Jersey 07974-0636 (US)
(72) Inventor: Goss, Stephen Clifford, Wheaton, Illinois 60187 (US); Light, Jeffrey Ross, Lincolnwood, Illinois 60712 (US); Liu, Chung-Zin, Naperville, Illinois 60565 (US); Salvador, Omar Hernando, Wheaton, Illinois 60187 (US); Shah, Gitesh P., Naperville, Illinois 60565 (US); Stockert, Mark Kevin, 07-02 Ardmore View (SG); Strom, Kenneth Wayne, Naperville, Illinois 60560 (US); Varvaro, Charles, Glendale Heights, Illinois 60139 (US); Wilson, Randall Joe, Naperville, Illinois 60540 (US)
(74) Representative: Watts, Christopher Malcolm Kelway, Dr.

(57) **Abstract**

In a cellular mobile telecommunications system, apparatus and a method for altering the charge for a call if the occupancy of radio channels is above or below an appropriate threshold. For one proposed service, the users are charged less if they make calls during the time when the occupancy of radio channels is less than a threshold. For users having another proposed service, the charge is greater when the occupancy of the radio channels is above another threshold. Advantageously, users are encouraged to use the mobile telecommunications service when the occupancy of regular channels is low, and to use the service less when the occupancy of the radio channels is high.

## Description

### Technical Field:

This invention relates to the adjustment of charges for telecommunications calls in response to telecommunications traffic conditions.

### Problem:

In wireless cellular telecommunications systems, a major capital resource is the number of radio channels available for communicating with mobile stations in particular areas. The number of channels is determined by the number of transceivers provided for each cell, and the requirement that transceivers sharing a common frequency, timeslot, or code, not interfere with each other. During the busy hour, a radio channel for an additional call is frequently not available, but during off-peak periods or even during occasional intervals in the busy hour, channels are available. A service provider must balance the cost of providing enough transceivers to serve most calls during the busy hour against the cost of a large number of transceivers that are under utilized outside the busy hour. A problem of the prior art therefore, is that frequently many channels are available for calls, but these channels are not being used. This reduces the overall cost effectiveness of a cellular telecommunications system.

### Solution:

The above problem is substantially alleviated, and an advance is made over the teachings of the prior art in accordance with this invention, wherein a mobile cellular telecommunications system monitors the number of radio channels available to users, and upon detecting large numbers of available channels in one or more cellular areas, notifies users of mobile stations in those areas of this condition, and encourages those users to place calls by offering a lower rate for calls placed at that time. Advantageously, this arrangement encourages a better utilization of the radio channels of the mobile cellular telecommunications system.

In accordance with various embodiments of the invention, the mobile stations in an affected area comprising one or more cell sites and/or sectors are notified by some broadcast arrangement, or by a short message service message. It is an option for the carrier whether to reduce the rate for all customers placing calls during the interval of low channel usage, or only to reduce the rates for customers who have been informed of the low channel usage. In accordance with one preferred embodiment of the invention, the reduced rate is no longer available for new calls as soon as the number of available channels in the area goes below a threshold.

In accordance with another feature of this invention, the notification may be offered to everyone, or only to subscribers to a notification service. Advantageously, such subscribers are likely to be heavy users of the service.

The feature can also be used in a reverse sense, wherein subscribers of low cost calling plans are notified when rates are higher because of decreased available radio channel capacity.

### Brief Description of the Drawing(s):

Figure 1 is a block diagram of a cellular telecommunications system; and
Figures 2 and 3 are flow diagrams illustrating the operation of Applicants' method.

### Detailed Description:

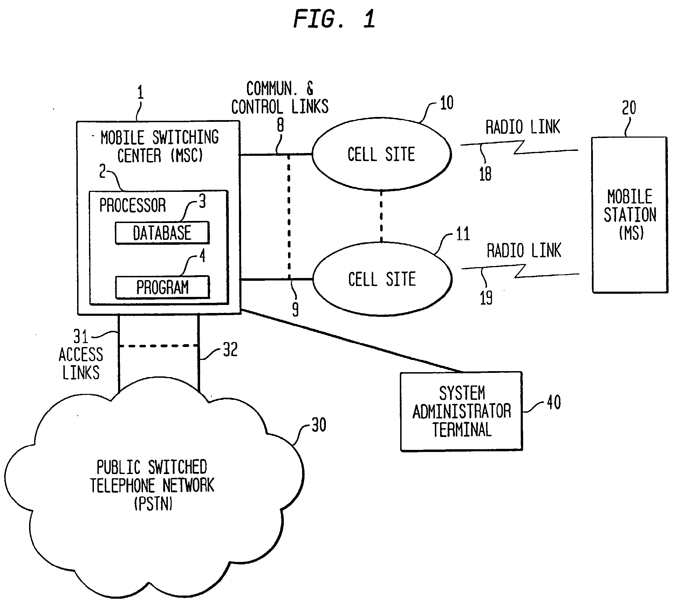

Figure 1 is a block diagram illustrating a mobile telecommunications system. Everything in Figure 1 is from the prior art except the software and the database of the Mobile Switching Center. Mobile Switching Center (1) controls a number of cell sites such as cell sites (10), ... , (11). It is connected to the cell sites by transmission links (8), ..., (9). The cell sites are connected to mobile stations such as mobile station (20) by radio links such as radio links (18) and (19), connecting cell sites (10) and (11), respectively, to mobile station (20). The radio links are limited resources in that each cell site can communicate only with a limited number of mobile stations via a limited number of radio links.

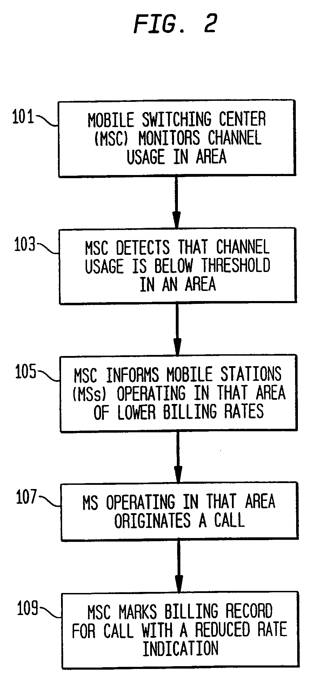

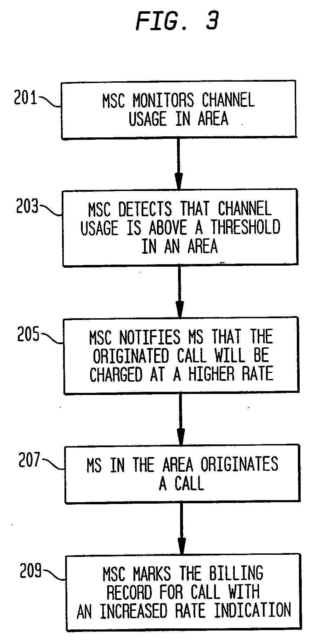

The Mobile Switching Center (1) is controlled by processor (2), comprising a database (3) for storing data necessary to perform the methods described in Figures 2 and 3. Theprocessor (2) is controlled by a program (4) stored in the memory of the processor. In this simple diagram, the processor means for controlling the Mobile Switching Center are shown as a processor (2) within MSC (1). In other embodiments, the processor (2) and the database (3) can be augmented by adjunct processors and adjunct databases to provide the information necessary for controlling the Mobile Switching Center. For example, a database of an adjunct processor might be used to store the identification of mobile stations having special classes of service in accordance with this invention. An adjunct database can be used for storing such information as the threshold number of radio channels in use for triggering either a lower tariff or a higher tariff.

Briefly, the Mobile Switching Center communicates with the Public Switched Telephone Network (30) over access links 31, ... 32, and communicates with a number of cell sites (10, ..., 11) over communication and control transmission links 8, , 9. The cell sites in turn then communicate with mobile stations via radio communication and control links (18, ..., 19).

Figure 2 is a flow diagram illustrating the operation of one aspect of Applicants' invention. The Mobile Switching Center, MSC (1), monitors channel use in the cell sites which it controls, (Action Block 101). If a large area is served by a plurality of Mobile Switching Centers (MSCs), these switching centers can exchange channel usage data pertaining to their respective cell sites. If an MSC detects that channel usage is below threshold in a particular area comprising one or more cells and/or sectors, (Action Block 103), the MSC informs mobile stations operating in that area of a lower billing rate, (Action Block 105). The MSC can maintain threshold data for each area, which can be defined by data in the database under the control of the System Administrator (Figure 1) at terminal (40). In accordance with one preferred embodiment, the MSC maintains two thresholds for each defined area: a first threshold for initiating a lower rate, and a second threshold (slightly higher than the first threshold) for terminating the offer of the lower rates. In addition, in accordance with one preferred embodiment, the MSC maintains thresholds for cell sites in each specific area so that if any of these cell sites have a channel usage exceeding that threshold, the lower rates will not be offered. The MSC notifies mobile stations operating in the appropriate area by some type of broadcast message or by individual short message service (SMS) messages relayed through the cell sites. The individual mobile stations will be equipped to alert the customer in case of receipt of either of these messages.

Responsive to receipt of one of these messages, a user at a mobile station in the area in which the low channel usage was detected originates a call, (Action Block 107). When the MSC prepares a billing record for that call, the MSC marks the billing record with a reduced rate mark which is interpreted in the billing center so that the charge to the customer is less, (Action Block 109).

A reduced charge can be, for example, a simple percentage reduction of the normal charge, a charge at off-peak pricing during an on-peak period, or a reduction in the number of minutes for which the call is billed.

In accordance with another embodiment of Applicants' invention, an increase tariff can be charged if the number of channels in use when a customer places a call exceeds a different, higher threshold. If the customer is to be charged more for this call, the customer can be notified through, for example, a short message service message. For the higher costs during especially busy periods, a special tariff class of service may be required; customers having this special class of service would have generally lower charges, or a generally lower basic rate, but would have to be willing to pay higher rates when warned of high usage of the channels in their present cell.

Figure 3 illustrates this other aspect of Applicants' invention. The MSC monitors channel usage in an area, (Action Block 201). An area defined here, as in the case of Figure 2, comprises one or more cells and/or sectors. The MSC detects that channel usage is above a threshold in an area, (Action Block 203). The MSC, via the cell sites, notifies the mobile stations operating in that area that originating calls will be charged at a higher rate (Action Block 205). Alternatively, MSs can be notified of the higher rates after a call is originated. A user of a mobile station (MS) in that area originates a call (Action Block 207). If the MS continues the originated call, then the MSC marks the billing record for the call with an increased rate indication, (Action Block 209).

The above description is of one preferred embodiment of Applicants' invention. Many other embodiments will be apparent to those of ordinary skill without departing from the scope of this invention. The invention is limited only by the attached Claims.

## Claims

1. A method of charging for a call in a cellular mobile telecommunications system,
comprising the steps of:
maintaining a record of channel usage for areas, each area comprising one or more cell sites and/or sectors in said system;
responsive to detection of a low occupancy of radio channels in an area, notifying mobile stations in said area that calls can now be originated and completed for a charge that is less than a normal charge for an originated call: and
making a billing record for a call for which the charge is to be lower, said billing record comprising information to allow a billing processor to make a lower charge for said call.

2. The method of Claim 1, wherein said lower cost is offered to only a subset of mobile stations, defined by a class of service, served by said cellular mobile telecommunications system.

3. The method of Claim 1, wherein said lower charge is turned on by a radio channel occupancy of said area that is below a first threshold.

4. The method of Claim 1, further comprising the steps of:
detecting a mobile station origination:
responsive to detecting that an area, comprising one or more cell sites and/or sectors from which said mobile station originates, has a channel occupancy above a first threshold, making a billing record for a call for which the charge is to be higher, said billing record comprising information to allow a billing processor to make a higher charge for said call.

5. The method of Claim 4, further comprising the step of:
notifying a customer using said mobile station, of said higher charge.

6. The method of Claim 4, further responsive to detection of a high occupancy of radio channels in an area, notifying mobile stations in said area that calls originated and completed will be subject to a higher than normal charge for an originated call.

7. Apparatus for charging for a call in a cellular mobile telecommunications system, comprising:
means for storing data specifying a number of radio channels available in an area;
processor means for controlling said mobile telecommunications system, and for making billing entries for calls on said system;
said processor means operative under the control of a program for:
detecting a low occupancy of radio channels in said area;
controlling notification of mobile stations in said area that calls can now be originated and completed for a charge that is less than the normal charge for an originated call; and
responsive to receipt of an originated call from one of the notified mobile stations, making a billing record for said originated call, said billing record comprising information to allow a billing processor to make a lower than normal charge for that call.

8. The apparatus of Claim 7, wherein said processor means are further operative under the control of said program for offering said lower costs to only a subset of mobile stations served by said cellular mobile telecommunications system, and wherein said processor means are operative under the control of said program for defining said subset of mobile stations by a class of service.

9. The apparatus of Claim 7, further comprising:
means for detecting a mobile station origination;
means for detecting that an area, comprising one or more cell sites and/or sectors from which said mobile station originates, has a channel occupancy above a first threshold; and
means, responsive to detection that said occupancy is above said first threshold, for making a billing entry for said origination that comprises information to specify a higher charge than a billing entry made when said mobile station originates a call and said occupancy is below said first threshold.

10. The apparatus of Claim 9, further comprising means for notifying a customer using said mobile station of said higher charge.
